# EUROPEAN PATENT SPECIFICATION

(11) **EP 0 513 865 B1**
(45) Date of publication and mention of the grant of the patent: **23.08.1995**
(21) Application number: 92113269.2
(22) Date of filing: 23.10.1987
(51) Int. Cl.: G01C 9/10, G01C 9/06, H01H 36/00, H01H 35/02

(54) **Magnetic tilt sensor having a magnetic body arranged on the ceiling portion of the case**
Magnetischer Neigungssensor mit einem magnetischen Körper auf dem Gehäusedeckel
Capteur d'inclinaison ayant un corps magnétique arrangé sur le couvercle du boîtier

(30) Priority: 25.10.1986 JP 164055/86; 07.03.1987 JP 51209/87; 07.03.1987 JP 32581/87; 10.03.1987 JP 33908/87
(43) Date of publication of application: 19.11.1992
(62) Divisional of application: 87115618.8
(73) Proprietor: TDK Corporation, Chuo-ku, Tokyo-to 103 (JP)
(72) Inventor: Odagawa, Yoshimoto, Chiba-ken (JP); Yanagisawa, Yasushi, Chiba-shi Chiba-ken (JP); Imaizumi, Hiraku, Inba-gun Chiba-ken (JP); Mori, Teruo, Chiba-ken (JP); Shioura, Takashi, Narita-shi Chiba-ken (JP); Okada, Kazuhiro, Chiba-ken (JP); Yanagisawa, Kiyoshi, Inba-gun Chiba-ken (JP)
(74) Representative: Schwabe, Hans-Georg, Dipl.-Ing.

(56) References cited:
- GB-A- 2 158 239
- US-A- 3 601 729
- US-A- 3 886 339
- PATENT ABSTRACTS OF JAPAN vol. 9, no. 174 (P-374)(1897) 19 July 1985 & JP-A-6049214

## Description

The present invention relates to a tilt sensor comprising a nonmagnetic case having a sealed hollow portion defined by a bottom portion, a side wall and a ceiling portion, a permanent magnet, the surface of said magnet being coated with a magnetic fluid, said permanent magnet being housed in the hollow portion, and a magnetic sensing element, arranged outside the bottom portion of said case, for detecting the magnetic field of said permanent magnet.

Such a tilt sensor is known from GB-A-2 158 239. With this known tilt sensor the sealed hollow portion is formed as a spherical chamber filled with a ferrofluid, within which floats a body comprising a buoyant core carrying the magnet. The magnetic sensing element is comprised of two Hall effect devises which are located in recesses in the ends of the housing. Moreover the housing of this known tilt sensor carries a calibration solenoid.

US-A-3 601 729 discloses a switch assembly for use in an environment requiring automatic switch operation under certain conditions, as when the switch assembly or the body on which the switch is mounted, is tilted or changed in position beyond a predetermined amount. This known assembly includes a housing in which is mounted the switch preferably of the normally open type. A cavity is formed in the housing and has a point adjacent but spaced from the switch contact elements. Actuating means are disposed in the housing cavity and in one embodiment includes a magnetic member that moves away from the close adjacency to the switch contact elements when the housing is tilted beyond a predetermined amount. Thus, the switch opens until the magnetic member returns to its adjacent position, as when the housing is righted. In another modification a magnetic member is fixed in the housing and magnetic-flux-detecting means are pivotally mounted in the housing and in the cavity. As the housing is tilted, the deflecting means pivots into position between the magnetic member and the switch, thus deflecting the magnetic flux field. The magnetic attraction is removed and the switch opens. When the housing is righted, the magnetic flux is again established to the switch to close the switch contacts.

A further tilt sensor is known from European patent application No. 87 115 618.8-2213 and comprises a nonmagnetic case (1) having a hollow portion defined by a bottom portion (2), a side wall and a ceiling portion, a permanent magnet (3), a surface of which is coated with a magnetic fluid (4), said permanent magnet being housed in the hollow portion, and a magnetic sensing element arranged outside the bottom portion of said case for detecting a magnetism of said permanent magnet.

In case the above described sensor is tilted, the permanent magnet ist moved by its weight to the lowest position along the bottom portion so that the intensity of magnetism around the magnetic sensing element changes.

The main drawback of this tilt sensor is that when the case is tilted and the permanent magnet is moved, the gravity is not the only factor which acts on the magnet. Especially, the magnetic attraction between the magnet und the magnetic sensing elements has a great influence. For this reason a highly precise and reliable detection of whether a tilt of an object is below or exceeds a predetermined angle cannot be guaranted.

It is an object of the present invention to provide a tilt sensor, wherein a permanent magnet can be adjusted to be reliably moved at a predetermined tilt angle so that a magnetic sensing element can be reliably operated.

In order to solve this object the present invention is characterized in that
(a) said permanent magnet is housed in the hollow portion to be freely displaceable from the center of said bottom portion in a radial direction;
(b) said bottom portion consists of a first bottom portion comprising a flat surface located at the central position of the hollow portion, and a second bottom portion formed continuous with and around the flat surface to have a predetermined angle with respect to said flat surface; and
(c) a magnetic body is such arranged on the ceiling portion of said nonmagnetic case that the position of said magnetic body can be adjusted in a radial direction in order to apply an adjustable magnetic field to said permanent magnet.

The above and other objections, features and advantages of the present invention will be apparent from the following detailed description of an embodiment in conjunction with the accompanying drawings.
- Fig. 1 (a): is a plane view of the embodiment of the present invention;
- Fig. 1 (b): is a sectional view thereof;
- Fig. 2: is an exploded perspective view thereof;
- Figs. 3 (a) and 3 (b): are views showing an operation when a magnetic body is not disposed on a ceiling portion;
- Figs. 4 (a) and 4 (b): are views showing an operation when a magnetic body is disposed on the ceiling portion;
- Fig. 5: is a view showing a relationship between mounting positions of the magnetic body of the present invention and response angles.

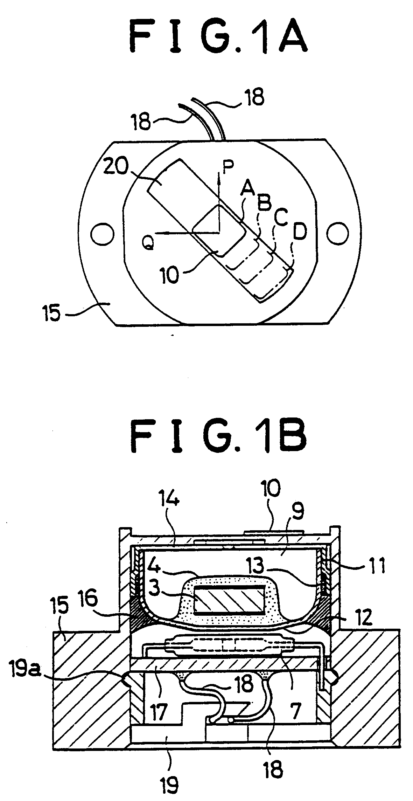

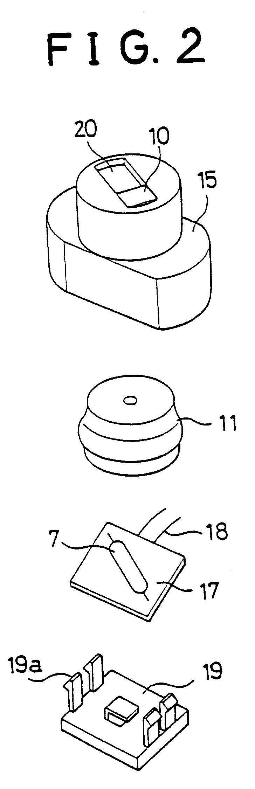

Fig. 1 shows an embodiment of the present invention, and Fig. 2 is an exploded perspective view thereof. Reference numeral 11 denotes a nonmagnetic case which is constituted by a bottom portion 12 consisting of a first bottom surface located at the central portion of the case and a second bottom surface continuous with and crossing the first bottom surface at a predetermined angle, side wall 13 continuous with the bottom portion 12, and lid 14, and includes a sealed hollow portion 9. The hollow portion 9 contains a substantially disklike permanent magnet 3, a surface of which is coated with a magnetic fluid 4. Reference numeral 15 denotes a sensor mounting base. The case 11 is inserted into an upper portion of the sensor mounting base and fixed by a resin 16.

Reference numeral 7 denotes a lead switch serving as a magnetic sensing element disposed on a printed board 17, lead terminals of the lead switch being soldered. Leads 18 extend from the printed board. Reference numeral 19 denotes a lower cover fixed by fitting pawls 19a extending from opposite sides in recesses formed in the mounting base 15. Reference numeral 20 denotes a groove formed in the upper surface of the mounting base 15. For example, an amorphous magnetic body 10 having a large saturation magnetization (σₛ) is e.g. adhered and fixed to a specific portion of the groove.

As is apparent from Fig. 2, the lead switch 7 is mounted on the printed board along a diagonal line thereof. The groove 20 formed on the upper surface of the mounting base 15 is arranged in the same direction as that of the lead switch 7. This arrangement is made so that a single lead switch can detect tilts in directions indicated by arrows P and Q shown in Fig. 1 (a).

This embodiment can be characterized in that a magnetic body is arranged on a ceiling portion of the case. An operation of the embodiment will be described in comparison with a case wherein the magnetic body is not arranged on the ceiling portion of the case.

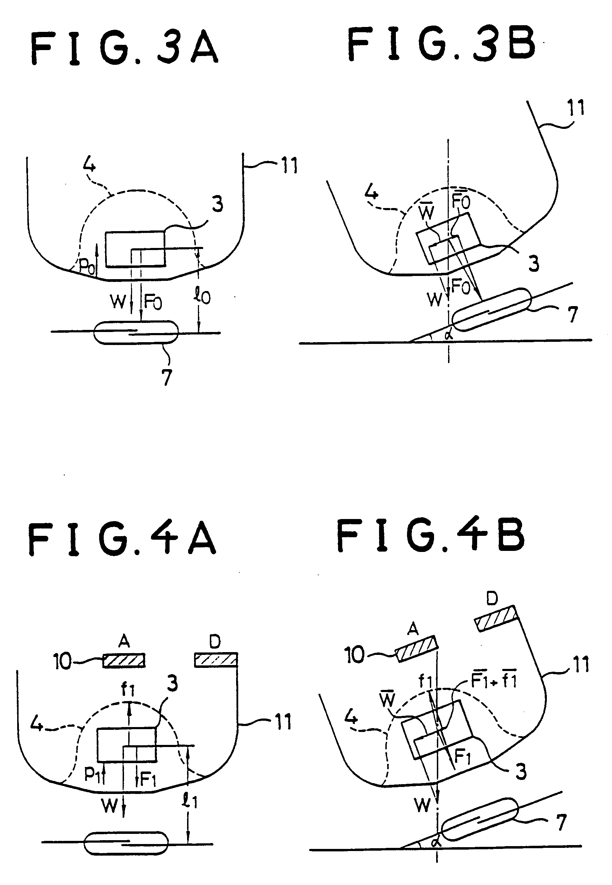

Figs. 3 (a) and 3 (b) show a case wherein the magnetic body is not arranged on the ceiling portion of the case. In Fig. 3 (a), a gravity W vertically acts on the permanent magnet 3 while a magnetic attraction F₀ acts between the permanent magnet 3 and the leads of the lead switch 7. The magnetic fluid 4 covering the permanent magnet 3 flows between the permanent magnet and the bottom surface of the case, and tends to float the permanent magnet. That is, an upward force P₀ acts on the permanent magnet 3. The force is balanced as follows:$\text{P₀ = W + F₀}$ wherein a distance between the permanent magnet and the lead switch is represented by ℓ₀.

As shown in Fig. 3 (b), as the case 11 is tilted, a component of force W̅ of the gravity W is generated. The component of force W̅ is a force to move the permanent magnet 3 to a lower position of the bottom portion of the case 11. In addition, a component of force F̅₀ of the magnetic attraction F₀ is generated. The component of force F̅₀ acts in a direction opposite to that of the component of force W̅. Therefore, the component of force F̅₀ is a force to stop the movement of the permanent magnet. Note that the vector of force shown here only indicates a qualitative relationship. Furthermore, in this case, the viscosity and surface tension of the magnetic fluid are neglected.

Figs. 4 (a) and 4 (b) show an arrangement according to the present invention, wherein the magnetic body 10 is disposed on a central portion A of the ceiling portion. In this case, as shown in Fig. 4 (a), a magnetic attraction f₁ generated by the magnetic body 10 acts on the permanent magnet 3 other than the gravity W, the magnetic attraction F₁, and the upward force P₁ generated by the magnetic fluid 4. They are balanced as follows:$\text{P₁ + f₁ = W + F₁}$ wherein a distance between the permanent magnet and the lead switch is represented by ℓ₁.

In this case, since the magnetic attraction f₁ is present between the permanent magnet 3 and the magnetic body 10, the permanent magnet 3 is attracted toward the magnetic body 10 compared with the case shown in Figs. 3 (a) and 3 (b). More specifically, the distance ℓ₁ between the permanent magnet 3 and the lead switch 7 is represented by ℓ₁ > ℓ₀. As a result, the magnetic attraction F₁ acting between the permanent magnet 3 and the lead switch 7 is represented by F₁ < F₀.

When the case 11 is tilted, as shown in Fig. 4 (b), the component of force W̅ of the gravity W, the component of force F̅₁ of the magnetic attraction F₁, and a component of force f̅₁ of the magnetic attraction f₁ are generated. Both components of force F̅₁ and f̅₁ act in a direction opposite to that of the component of force W̅ of the gravity. When the components of force F̅₁ and f̅₁ are compared with the components of force F̅₀ in Fig. 3 (b), F̅₁ + f̅₁ < F̅₀. In conclusion, the arrangement wherein the magnetic body 10 is disposed on the central portion A of the ceiling portion of the case allows easy movement of the permanent magnet 3, and hence the lead switch 7 is operated at a small tilt angle α.

However, when the magnetic body 10 is located at a position D of the ceiling portion, a magnetic attraction f₂ (not shown) is small because the distance between the permanent magnet and the magnetic body is large. Therefore, the permanent magnet floats above the bottom surface of the case at a small height. For this reason, the magnetic attraction F₂ (not shown) between the permanent magnet and the lead switch is not considerably different from the magnetic attraction F₀ in Fig. 3. On the other hand, as is apparent from the direction of the magnetic attraction f₂, a component of force f̅₂ (not shown) is large. As a result, $\overline{\text{F}} \text{₂ +} \overline{\text{f}} \text{₂ > F₀}$ 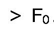 . In conclusion, when the magnetic body 10 is arranged at the position D of the ceiling portion of the case, the permanent magnetic 3 is not easily moved, and hence the switch 7 is operated at a large tilt angle α.

Thus, tilt angles of the case at which the lead switch is operated, i.e. response angles, can be adjusted by the positions (the positions A, B, C and D in Fig. 1 (a)) of the magnetic body located on the ceiling portion. Furthermore, the response angles are influenced by an intensity of the saturation magnetization (σₛ) of the magnetic body 10 and a distance between the permanent magnet and the magnetic body 10.

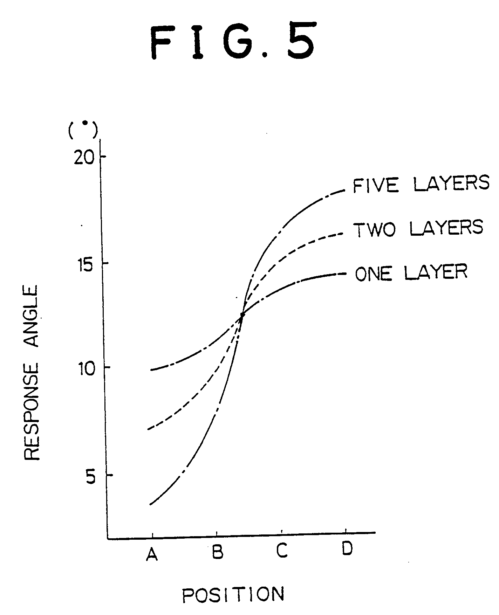

Fig. 5 is a graph wherein response angles are obtained when an amorphous magnetic body of 6 mm² is moved to the positions A, B, C and D, respectively. When the magnetic body was not used, the response angle was 12.2°. As is apparent from the above graph, as the magnetic body is moved closer to the position A, the response angle becomes smaller. On the contrary, when the magnetic body is moved closer to the position D, the response angle becomes larger. In addition, it is found that the response angles are greatly changed by stacking a plurality of the magnetic bodies to change the mass.

The response angles can be arbitrarily changed in the above-described manner. Therefore, even if variations in e.g. mounting positions of the components of the sensor are present, the lead switch can be operated at a predetermined tilt angle.

Although in the above embodiment, an amorphous magnetic thin piece is adhered so as to be used as the magnetic body, the magnetic body is not limited to this, but can be any material such as silica steel as long as it has large saturation magnetization. In addition, a trimmer may be arranged on the central portion of the ceiling portion other than the magnetic thin piece and a distance between a magnetic piece of the trimmer and the permanent magnet may be adjusted. When the magnetic piece is lowered to shorten the distance between the magnetic piece and the permanent magnet, the permanent magnet is displaced upwardly, and hence the distance between the permanent magnet and the lead switch becomes long, so that the magnetic attraction acting therebetween becomes small. As a result, the permanent magnet can be easily moved at a small tilt angle, thereby reducing the response angle. On the contrary, it is apparent that when the magnetic piece is moved away from the permanent magnet, the response angles become large.

## Claims

1. A tilt sensor comprising a nonmagnetic case (11) having a sealed hollow portion (9) defined by a bottom portion (12), a side wall (13) and a ceiling portion (14), a permanent magnet (3), the surface of said magnet being coated with a magnetic fluid (4), said permanent magnet being housed in the hollow portion (9), and a magnetic sensing element (7), arranged outside the bottom portion (12) of said case (11), for detecting the magnetic field of said permanent magnet (3), **characterized** in that
(a) said permanent magnet is housed in the hollow portion (9) to be freely displaceable from the center of said bottom portion in a radial direction;
(b) said bottom portion (12) consists of a first bottom portion comprising a flat surface located at the central position of the hollow portion, and a second bottom portion formed continuous with and around the flat surface to have a predetermined angle with respect to said flat surface; and
(c) a magnetic body (10) is such arranged on the ceiling portion of said nonmagnetic case (11) that the position of said magnetic body (10) can be adjusted in a radial direction in order to apply an adjustable magnetic field to said permanent magnet (3).

2. A tilt sensor according to claim 1, wherein said magnetic sensing element comprises a lead switch (7) arranged to be substantially parallel to the bottom portion.

3. A tilt sensor according to claim 2 or 1, wherein a position of said magnetic body (10) arranged on the ceiling portion can be adjusted.

4. A tilt sensor according to claim 1 or 2, wherein said magnetic body (10) comprises a trimmer arranged on a central portion of the ceiling portion.

## Patentansprüche

1. Neigungssensor mit einem nichtmagnetischen Gehäuse (11), welches einen abgedichteten hohlen Abschnitt (9) aufweist, der durch einen Bodenabschnitt (12), eine Seitenwand (13) und einen Deckenabschnitt (14) definiert ist, mit einem Permanentmagneten (3), dessen Oberfläche mit einem magnetischen Fluid (4) bedeckt ist, wobei der Permanentmagnet in dem hohlen Abschnitt (9) aufgenommen ist, und ein magnetisches Fühlelement (7) außerhalb des Bodenabschnitts (12) des Gehäuses (11) angeordnet ist, um das Magnetfeld des Permanentmagneten (3) zu detektieren, dadurch **gekennzeichnet,** daß
(a) der Permanentmagnet in dem hohlen Abschnitt (9) so aufgenommen ist, daß er frei vom Zentrum des Bodenabschnitts in einer radialen Richtung verschiebbar ist,
(b) der Bodenabschnitt (12) aus einem ersten Bodenabschnitt besteht, der eine flache Oberfläche besitzt, die an der zentralen Position des hohlen Abschnitts gelegen ist, und einen zweiten Bodenabschnitt besitzt, der durchgehend mit und die flache Oberfläche umschließend bzw. umgebend ausgebildet ist, so daß dieser einen vorbestimmten Winkel mit der flachen Oberfläche einschließt, und
(c) der magnetische Körper (10) an dem Deckenabschnitt des nichtmagnetischen Gehäuses (11) so angeordnet ist, daß die Position des magnetischen Körpers (10) in einer radialen Richtung eingestellt werden kann, um ein einstellbares Magnetfeld am Permanentmagneten (3) anzulegen.

2. Neigungssensor nach Anspruch 1, bei welchem das magnetische Fühlelement einen Zungenschalter bzw. Reed-Schalter (7) aufweist, der so angeordnet ist, daß er im wesentlichen parallel zum Bodenabschnitt ist.

3. Neigungssensor nach Anspruch 1 oder 2, bei dem eine Position des magnetischen Körpers (10), der an dem Deckenabschnitt angeordnet ist, einstellbar ist.

4. Neigungssensor nach Anspruch 1 oder 2, bei dem der magnetische Körper (10) einen Trimmer umfaßt, der an einem zentralen Abschnitt des Deckenabschnitts angeordnet ist.

## Revendications

1. Capteur d'inclinaison comprenant un boîtier non magnétique (11) ayant une partie creuse fermée hermétiquement (9) définie par une partie de base (12), une paroi latérale (13) et une partie de plafond (14), un amant permanent (3), la surface dudit amant étant recouverte d'un fluide magnétique (4), ledit amant permanent étant logé dans la partie creuse (9), et un élément de détection magnétique (7) disposé à l'extérieur de la partie de base (12) dudit boîtier (11) pour détecter le champ magnétique dudit amant permanent (3),
caractérisé en ce que :
(a) ledit aimant permanent est logé dans la partie creuse (9) pour pouvoir être déplacé librement à partir du centre de ladite partie de base dans une direction radiale;
(b) ladite partie de base (12) est constituée d'une première partie de base comprenant une surface plane située en position centrale de la partie creuse, et d'une seconde partie de base, formée de façon continue avec la surface plane et autour de celle-ci, pour avoir un angle prédéterminé par rapport à ladite surface plane ; et
(c) un corps magnétique (10) est disposé sur la partie de plafond dudit boîtier non magnétique (11) de telle sorte que la position dudit corps magnétique (10) puisse être ajustée dans une direction radiale, afin d'appliquer un champ magnétique ajustable audit aiment permanent (3).

2. Capteur d'inclinaison selon la revendication 1, dans lequel ledit élément de détection magnétique comprend un commutateur à conducteurs (7) disposé pour être sensiblement parallèle à la partie de base.

3. Capteur d'inclinaison selon la revendication 2 ou 1, dans lequel une position dudit corps magnétique (10) disposé sur la partie de plafond peut être ajustée.

4. Capteur d'inclinaison selon la revendication 1 ou 2, dans lequel ledit corps magnétique (10) comprend un dispositif réglage disposé sur une partie centrale de la partie plafond.
